Europäisches Patentamt

European Patent Office

Office européen des brevets

(11) Numéro de publication: **0 364 021 B1**

# FASCICULE DE BREVET EUROPEEN

(45) Date de publication de fascicule du brevet: **12.05.93** (51) Int. Cl.5: **B29C 47/86**

(21) Numéro de dépôt: **89202450.6**

(22) Date de dépôt: **29.09.89**

(54) **Procédé pour réaliser, par extrusion soufflée, une gaine en résine à base de chlorure de vinyle dont au moins une face présente un aspect mat.**

(30) Priorité: **10.10.88 FR 8813404**

(43) Date de publication de la demande:
**18.04.90 Bulletin 90/16**

(45) Mention de la délivrance du brevet:
**12.05.93 Bulletin 93/19**

(84) Etats contractants désignés:
**AT BE CH DE ES GB GR IT LI LU NL SE**

(56) Documents cités:
| | |
|---|---|
| EP-A- 0 047 839 | EP-A- 0 180 571 |
| EP-A- 0 185 863 | EP-A- 0 191 130 |
| EP-A- 0 210 108 | AU-B- 230 105 |
| DE-A- 2 610 972 | FR-A- 1 479 973 |
| GB-A- 1 157 245 | JP-A- 5 542 802 |
| US-A- 2 876 497 | |

KUNSTSTOFFE, vol. 76, février 1986, pages 117-122, RFA, Munich, DE; E. FISHER: "Die Fahrweise mit langem Hals"

PATENT ABSTRACTS OF JAPAN, vol. 10, no. 77 (M-464)[2134], 26 mars 1986, page 162 M 464; & JP-A-60 220 726 (KAWASUMI KA-GAKU KOGYO K.K.) 05-11-1985

(73) Titulaire: **SOLVAY**
**Rue du Prince Albert, 33**
**B-1050 Bruxelles(BE)**

(72) Inventeur: **Dehennau, Claude**
**Chemin des Postes, 236**
**B-1410 Waterloo(BE)**
Inventeur: **Dupont, Serge**
**Sint Annalaan, 108**
**B-1800 Vilvoorde(BE)**

(74) Mandataire: **Bouchoms, Maurice et al**
**Solvay Département de la Propriété Indus-**
**trielle, 310, rue de Ransbeek**
**B-1120 Bruxelles (BE)**

# EP 0 364 021 B1

**Description**

La présente invention concerne un procédé pour réaliser, par extrusion soufflée, une gaine en résine à base de chlorure de vinyle dont au moins une face présente une surface mate et qui convient particulièrement pour réaliser des sacs d'emballage pouvant être stérilisés.

Les résines à base de chlorure de vinyle, c'est-à-dire les résines contenant au moins 70 % molaires d'unités dérivées du chlorure de vinyle, constituent un matériau de choix pour la réalisation de gaines tubulaires exploitables notamment pour la réalisation de sacs d'emballage et, en particulier, de sacs pour le conditionnement de liquides médicaux.

Pour réaliser de telles gaines, on extrude généralement la résine sous forme d'un tube et on insuffle de l'air ou un autre gaz dans le tube extrudé de façon à amener celui-ci au diamètre de la gaine souhaitée, cette gaine étant alors aplatie par passage entre des rouleaux et généralement stockée en bobines.

Lorsqu'on procède de cette façon, avec des conditions normales d'extrusion, on obtient généralement une gaine dont les deux faces sont parfaitement lisses et exemptes de tout défaut.

Il a été toutefois constaté qu'une telle gaine ne convient pas de façon idéale pour la réalisation de sacs. En effet, lorsque la gaine ainsi produite est débobinée, découpée et éventuellement soudée pour confectionner des sacs, on constate que les faces en regard de la gaine, du fait de leur état de surface, sont pratiquement collées l'une sur l'autre et qu'il est très malaisé de les séparer soit pour introduire des embouts de remplissage, soit pour y introduire le produit à conditionner. L'état de surface des faces extérieures de la gaine peut aussi se révéler désavantageux car celui-ci peut conduire à des difficultés de débobinage de la gaine ou à la production de sacs qui, lors de leur empilage à vide, ont tendance à adhérer les uns sur les autres.

Pour remédier à cet inconvénient, on peut certes incorporer des agents dits de glissement, tels que des cires, dans la résine à base de chlorure de vinyle mise en oeuvre pour produire la gaine. Toutefois, ce moyen est généralement coûteux et, en plus, il peut se révéler inacceptable par exemple lorsque la gaine est utilisée pour la production de sacs pour le conditionnement de liquides médicaux qui ne peuvent être souillés par des contaminants tels que des cires extraites par migration du contenant.

Dans le cas de la production de sacs pour le conditionnement de liquides médicaux, le parfait état de surface de la gaine de départ se révèle par ailleurs d'autant plus néfaste que ceux-ci doivent souvent subir des traitements de stérilisation par la chaleur qui renforcent l'effet de collage ou d'adhérence susmentionné.

Un autre moyen pour réaliser une gaine en résine à base de chlorure de vinyle ne présentant pas l'inconvénient de surface susmentionné, consiste à effectuer l'extrusion du tube de départ de façon telle qu'au moins une de ses surfaces soit refroidie à une température nettement inférieure à la température d'extrusion et ce en amont de l'orifice de sortie de la filière d'extrusion. Un tel procédé est notamment décrit succinctement dans la demande de brevet japonais JP-A-46-4910 déposée le 13 janvier 1966 qui enseigne seulement que le refroidissement doit être exécuté uniquement à l'extrémité de la filière d'extrusion.

Dans la demande de brevet européen EP-A-0191130 déposée le 29 juin 1985, on a également décrit un procédé pour produire par extrusion de feuilles en polyvinylbutyral présentant un aspect rugueux en soumettant ladite feuille à une réfrigération au moyen d'eau à sa sortie de la filière, la réfrigération pouvant être initiée dans l'extrémité de la filière d'extrusion et dans la demande de brevet européen EP-A-0180571 déposée le 6 septembre 1985 on a décrit une filière ronde pour l'extrusion de tubes dont la température est réglable par secteurs le long de sa périphérie.

Enfin dans la demande de brevet européen EP-A-0210108 déposée par la suite, on précise que, pour obtenir des films mats selon la technique proposée dans la demande de brevet japonais JP-A-46-4910 précitée, la réfrigération ne doit pas être effectuée sur une distance de plus de 30 mm de l'orifice de sortie de la filière et que la réfrigération doit être telle que la résine superficielle soit refroidie de 5 à 60°C.

Il a toutefois été constaté que ces conditions ne suffisent pas pour garantir, ipso facto, la production d'une gaine dont au moins une des faces présente un degré de matité suffisant pour supprimer tout inconvénient ultérieur dû à des phénomènes de collage ou d'auto-adhérence. La présente invention a dès lors pour but de fournir un procédé du type mentionné ci-avant qui conduit de façon sûre à la production d'une gaine dont une des faces au moins présente un degré de matité suffisant pour permettre la production de sacs d'emballage en évitant tout phénomène de collage intempestif.

L'invention concerne dès lors un procédé, découlant des enseignements de la demande de brevet japonais 46-4910 précitée, pour réaliser, par extrusion soufflée, une gaine en résine à base de chlorure de vinyle dont au moins une face présente un aspect mat et qui convient particulièrement pour produire des sacs d'emballage pouvant être éventuellement stérilisés, dans lequel au moins une des faces de la gaine extrudée est refroidie superficiellement en amont de l'orifice de sortie de la filière d'extrusion par

2

l'intermédiaire d'une circulation d'un fluide réfrigérant qui se caractérise en ce qu'on choisit la température To du fluide réfrigérant de façon à satisfaire la relation :

$$Tm - \frac{0,40 \cdot Tc}{(1-0,32 \; G^{0,1525})} - 35°C \leq To \leq Tm - \frac{0,40 \cdot Tc}{(1-0,32 \; G^{0,1525})} - 2°C$$

dans laquelle :
- Tm est la température moyenne de la résine à la sortie de la filière,
- Tc est une température caractéristique de la résine extrudée et est donnée par la relation :

$$Tc = \frac{RTm^2}{E}$$

dans laquelle E est l'énergie d'activation de la résine mesurée au moyen d'un viscosimètre à capillaire, à la température Tm, R étant la constante universelle des gaz, et
- G est donné par la formule :

$$G = \frac{\rho \; C_p \; V \; H^2}{\lambda L}$$

dans laquelle :
- $\rho$ est la masse volumique de la résine,
- $C_p$ est la chaleur spécifique de la résine,
- V est la vitesse moyenne d'extrusion de la résine dans la zone réfrigérée,
- H est la hauteur de l'entrefer de la filière dans la zone réfrigérée,
- L est la longueur de la zone réfrigérée et
- $\lambda$ est la conductibilité thermique de la résine.

De préférence, on choisit la température To de façon à satisfaire la relation :

$$Tm - \frac{0,40 \cdot Tc}{(1-0,32 \; G^{0,1525})} - 30°C \leq To \leq Tm - \frac{0,40 \cdot Tc}{(1-0,32 \; G^{0,1525})} - 4°C$$

La résine à base de chlorure de vinyle mise en oeuvre dans le procédé conforme à l'invention est, de préférence, un homopolymère ou un copolymère plastifié du chlorure de vinyle de dureté Shore A, mesurée selon la norme ASTM D2240, comprise entre 60 et 95, la teneur en plastifiant étant de 35 à 75 parties en poids. Par copolymère du chlorure de vinyle, on entend un copolymère contenant au moins 70 % en poids d'unités dérivées du chlorure de vinyle, le ou les comonomère(s) utilisé(s) pour sa production étant choisi(s) notamment dans le groupe formé par les oléfines telles que l'éthylène, le propylène et le styrène, et les esters tels que l'acétate de vinyle et les acrylates et méthacrylates d'alkyle. En règle générale, la préférence est toutefois accordée aux résines à base d'homopolymères du chlorure de vinyle.

Les plastifiants utilisables peuvent être choisis indifféremment parmi les plastifiants monomériques ou polymériques usuels des polymères du chlorure de vinyle. A titre d'exemples non limitatif de tels plastifiants, on peut mentionner les phtalates, les sébaçates, les adipates, les trimellitates, les citrates, les phosphates et les polyesters tels que la poly $-\epsilon-$ caprolactone et leurs mélanges.

La réfrigération superficielle d'une ou des deux faces de la gaine extrudée est obtenue par une circulation d'un fluide réfrigérant, généralement de l'huile ou un autre fluide, dans l'extrémité de la filière et/ou du noyau du dispositif d'extrusion. Cette réfrigération est, de préférence, réalisée par un mince film annulaire de fluide réfrigérant (épaisseur de l'ordre du millimètre) circulant axialement, c'est $-$ à $-$ dire selon la direction de l'axe d'extrusion, de façon à assurer un refroidissement symétrique de la gaine conduisant à un matage uniforme. Selon l'invention, on préfère que la gaine soit refroidie, en amont de l'orifice de sortie

EP 0 364 021 B1

de la filière, sur une longueur de 3 à 30 mm, l'extrémité aval de la zone réfrigérée étant située à une distance de l'orifice de sortie comprise entre 0 et 60 mm. En règle générale, il convient que la distance entre le début de la zone réfrigérée et l'orifice de sortie de la filière n'excède pas 70 mm afin de ne pas générer une contre-pression inacceptable dans le dispositif d'extrusion en amont de la zone réfrigérée.

La température Tm de la résine extrudée est aisément déterminée notamment au moyen de sondes thermométriques, cette température varie généralement entre 180 et 195°C.

Le coefficient G est fonction du régime thermique en fin de filière d'extrusion et résulte de l'interaction entre un effet de conductance latérale caractérisé par la relation :

$$\lambda \frac{(Tm - To)}{H^2}$$

et un effet de conductance axiale caractérisé par la relation :

$$\frac{\rho \, C_p \, V}{L} (Tm - To).$$

Ce coefficient tient en fait compte des caractéristiques géométriques de la zone de réfrigération et des conditions d'extrusion, en particulier, de la vitesse d'extrusion.

La température Tc peut se déduire des propriétés rhéologiques de la résine mise en oeuvre et peut être quantifiée sur base de mesures de viscosité capillaire.

Dans la mise au point du procédé conforme à l'invention, le degré de matage de la gaine produite a été mesuré avec un appareil du type "Perth-o-meter" basé sur une mesure moyennée de l'amplitude des déplacements d'une aiguille perpendiculaire à la surface à caractériser, généralement exprimée en microns. Dans ce cas, on considère qu'un degré de matage de 0,5 micron correspond à la limite d'apparition du phénomène de matage. Toutefois, il a été constaté que le degré de matage nécessaire pour obtenir une gaine permettant la réalisation de sacs d'emballage pouvant être stérilisés sans présenter des phénomènes gênants de collage doit être au moins égale à 2 microns.

Pour déterminer cette valeur, on a effectué des essais d'adhérence sur des gaines mates conformément à la norme ASTM D1876 et mesuré les degrés de matage et on a constaté que l'on obtient une valeur d'adhérence acceptable, c'est-à-dire inférieure à 2,4 N/cm (mesurée à 23°C après stérilisation de 30 minutes à 121°C et avec une vitesse de traction de 250 mm/min) pour les échantillons dont le degré de matage mesuré est au moins égal à 2 microns.

Dans la relation donnant la température To dans le procédé conforme à l'invention, l'expression :

$$Tm - \frac{0,40 \cdot Tc}{(1-0,32 \, G^{0,1525})}$$

donne en fait la température à imposer au fluide réfrigérant pour obtenir un degré de matage de 0,5 micron correspondant au début de l'apparition du phénomène de matage, la relation complète donnant quant à elle la température à conférer au fluide réfrigérant pour obtenir un degré de matage au moins égal à 2 microns et ce en tenant compte de paramètres secondaires tels que la distance entre l'extrémité de la zone réfrigérée et l'orifice de sortie de la filière, les effets d'auto-échauffement, le matage une ou deux faces, etc.

Il a encore été constaté que la vitesse d'étirage exercée sur la gaine au sortir de la filière d'extrusion influence favorablement le matage de la gaine. On préfère, dès lors, que cette vitesse d'étirage soit au moins égale à 3 m/min et soit, de préférence, comprise entre 3 m/min et 13 m/min. Cette vitesse s'ajoute à la vitesse moyenne de la résine à la sortie de la filière.

Enfin, il a encore été constaté qu'un changement brutal de géométrie du canal d'écoulement de la résine en fin de filière et après la zone de réfrigération, tel qu'un réduction brusque de la section de passage de la résine extrudée, a pour effet, à température égale du fluide de réfrigération, d'augmenter l'amplitude du matage obtenu.

4

Le procédé conforme à l'invention est en outre illustré et explicité plus en détail par la description des essais de réalisation qui va suivre.

Pour ces essais, on a mis en oeuvre une composition de résine à base de chlorure de vinyle comprenant pour 100 kg d'un polychlorure de vinyle fabriqué et commercialisé par SOLVIC S.A. sous la marque Solvic 271, 44 litres de phtalate de dioctyle, 5 litres d'huile de soja époxydée, 2 kg de stabilisant à base de calcium et de zinc et 0,04 kg d'un colorant azurant.

Les caractéristiques physiques de cette composition sont reprises au tableau I ci-après.

Tableau I

| Dureté Shore A (ASTM D2240) | 85 |
| Masse volumique $\rho$ | 1.200 kg/m3 |
| Chaleur spécifique $C_p$ | 2.000 J/kg°K |
| Température caractéristique Tc | 59,24°C |
| Conductibilité thermique $\lambda$ | 0,15 W/m°K |

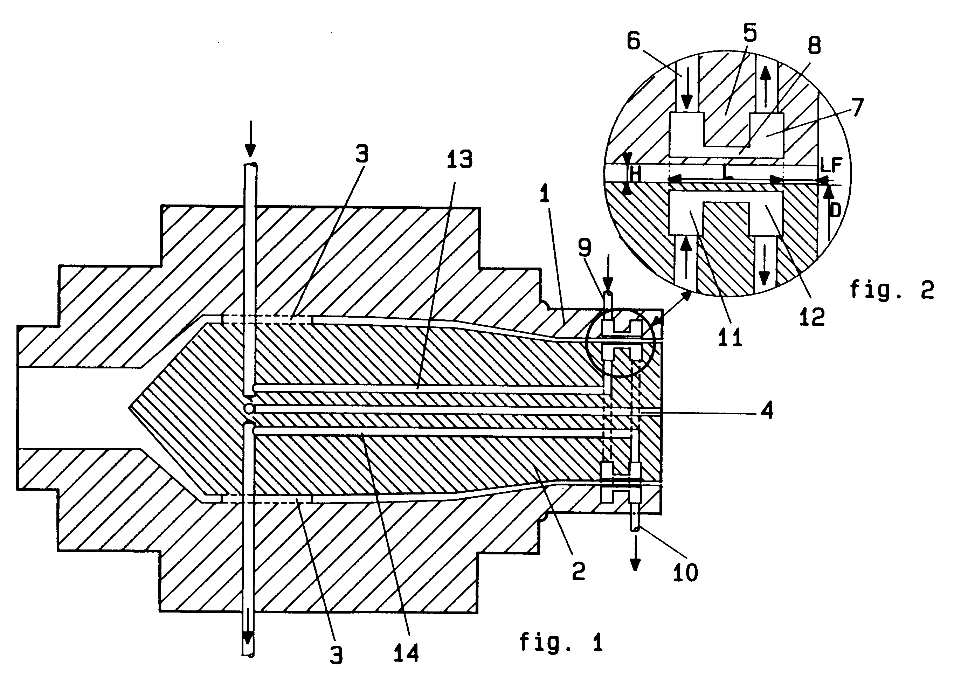

Avec cette composition, on a extrudé une série de gaines en utilisant des têtes d'extrusion telles que représentées aux figures 1 et 2 des dessins annexés dans lesquelles :

- la fig. 1 est une vue schématique et en coupe de la tête d'extrusion,
- la fig. 2 est une vue partielle de détail et en coupe du système de réfrigération de la filière.

La tête d'extrusion représentée dans les figures 1 et 2 comporte une filière annulaire 1 et un noyau interne 2 maintenu au moyen d'ailettes porte-noyau 3. Le noyau comporte un canal central 4, ce qui permet d'insuffler un fluide sous pression, en général de l'air, dans la gaine extrudée ainsi qu'il est usuel dans toute installation d'extrusion soufflée.

L'extrémité du noyau et l'extrémité de la filière sont équipées d'un système de réfrigération annulaire 5 comportant deux chambres espacées axialement 6 et 7, raccordées entre elles par un canal annulaire 8. Dans le système de réfrigération de la filière, une des chambres est raccordée à une conduite 9 d'amenée d'un fluide réfrigérant, en l'occurrence de l'huile, et l'autre à une conduite 10 d'évacuation de ce fluide.

Les deux chambres (11, 12) du système de réfrigération du noyau sont également et respectivement raccordées à des conduites d'amenée 13 et d'évacuation 14 d'un fluide réfrigérant qui traversent le noyau 2 et une des ailettes porte-noyau 3.

Les conduites d'amenée (9, 13) et d'évacuation (10, 14) du fluide réfrigérant sont équipées d'une garniture d'isolant thermique non représentée, de même que les systèmes de réfrigération hormis sur leur face en regard avec le canal d'écoulement de la résine extrudée.

Dans la fig. 2, on a en outre fait apparaître la longueur L de la zone de réfrigération, la hauteur H de l'entrefer de la filière dans la zone réfrigérée et la distance $L_F$ entre l'orifice de sortie de la filière et l'extrémité aval de la zone réfrigérée.

Le tableau 2 ci-après reprend les données et les résultats de cinq essais différents effectués selon le procédé de l'invention. Dans ce tableau, on a fait apparaître les valeurs différentes attribuées aux paramètres H, $\overline{V}$, L, Tm, on donne les limites à respecter, selon l'invention, pour la température To du fluide de réfrigération en fonction notamment de ces paramètres et on fait mention du degré de matage obtenu lors d'une fabrication avec une température To du fluide réfrigérant comprise entre les limites déterminées en conformité avec le procédé de l'invention. On constate que tous les essais effectués conduisent à un degré de matage satisfaisant. On constate en outre que la différence entre la température moyenne Tm de la résine extrudée et la température To à imposer au fluide réfrigérant est généralement supérieure à 60°C.

Enfin, à titre d'essai comparatif, on a répété l'essai de fabrication 1 en reprenant toutes les conditions précisées au tableau 2 mais en choisissant pour le fluide de réfrigération une température de 120°C, c'est-à-dire une température située au-delà de la zone de température déterminées par le procédé selon l'invention. On a constaté que, dans ce cas, le degré de matage obtenu s'élève à 0,5 micron et que, dès lors, la gaine produite ne convient pas pour produire des sacs d'emballage stérilisables n'entraînant aucun problème de collage.

Tableau 2

EP 0 364 021 B1

| ESSAI | D (mm) | H (mm) | L (mm) | $L_F$ (mm) | $\bar{V}$ (m/min) | Tm °C | Limites de To selon la relation donnée dans description | To expérimentée °C | matage micron | observation |
|---|---|---|---|---|---|---|---|---|---|---|
| 1 | 94,9 | 0,85 | 6 | 0 | 3,65 | 190 | 85-118 | 110 | 8 | |
| 2 | 94,9 | 0,85 | 18 | 12 | 4,1 | 190 | 100-133 | 130 | 4 | vitesse d'étirage importante |
| 3 | 94,9 | 0,85 | 6 | 0 | 4,7 | 190 | 79-112 | 100 | 6 | vitesse d'étirage importante |
| 4 | 68 | 0,7 | 18 | 12 | 12,2 | 190 | 90-123 | 105 | 2 | échauffement visqueux important |
| 5 | 67,4 | 1 | 18 | 42 | 5,9 | 190 | 91-124 | 97 | 6 | |

- Essai 1 : gaine aplatie de 180 mm de large, 0,35 mm d'épaisseur : matage de la face interne
- Essai 2 : gaine aplatie de 160 mm de large, 0,35 mm d'épaisseur : matage de la face externe
- Essai 3 : gaine aplatie de 160 mm de large, 0,35 mm d'épaisseur : matage de la face interne
- Essai 4 : gaine aplatie de 130 mm de large, 0,35 mm d'épaisseur : matage de la face externe
- Essai 5 : gaine aplatie de 120 mm de large, 0,35 mm d'épaisseur : matage de la face externe.

## Revendications

1. Procédé pour réaliser, par extrusion soufflée, une gaine en résine à base de chlorure de vinyle dont au moins une face présente un aspect mat et qui convient particulièrement pour produire des sacs d'emballage pouvant être éventuellement stérilisés, dans lequel au moins une des faces de la gaine extrudée est refroidie superficiellement en amont de l'orifice de sortie de la filière d'extrusion (1) par l'intermédiaire d'une circulation d'un fluide réfrigérant, caractérisé en ce qu'on choisit la température To du fluide réfrigérant de façon à satisfaire la relation :

$$Tm - \frac{0,40 \cdot Tc}{(1-0,32 \ G^{\ 0,1525})} - 35°C \leq To \leq Tm - \frac{0,40 \cdot Tc}{(1-0,32 \ G^{\ 0,1525})} - 2°C$$

dans laquelle :
- Tm est la température moyenne de la résine à la sortie de la filière,
- Tc est une température caractéristique de la résine extrudée et est donnée par la relation :

$$Tc = \frac{RTm^2}{E}$$

dans laquelle E est l'énergie d'activation de la résine mesurée au moyen d'un viscosimètre à capillaire, à la température Tm, R étant la constante universelle des gaz, et
- G est donné par la formule :

$$G = \frac{\rho \ C_p \ V \ H^2}{\lambda L}$$

dans laquelle :
- $\rho$ est la masse volumique de la résine,
- $C_p$ est la chaleur spécifique de la résine,
- $\overline{V}$ est la vitesse moyenne d'extrusion de la résine dans la partie réfrigérée (L) de la filière,
- H est la hauteur de l'entrefer de la filière dans la zone réfrigérée,
- L est la longueur de la zone réfrigérée et
- $\lambda$ est la conductibilité thermique de la résine.

2. Procédé selon la revendication 1, caractérisé en ce que la réfrigération est réalisée par un mince film annulaire de fluide réfrigérant circulant selon la direction de l'axe d'extrusion.

3. Procédé selon la revendication 1 ou 2, caractérisé en ce que la gaine extrudée est soumise à un étirage sous une vitesse comprise entre 3 m/min et 13 m/min.

4. Procédé selon l'une quelconque des revendications 1 à 3, caractérisé en ce qu'en fin de filière (1) on fait passer la résine par une section de passage brusquement réduite.

5. Procédé selon l'une quelconque des revendications 1 à 4, caractérisé en ce que la gaine est refroidie, en amont de l'orifice de sortie de la filière d'extrusion, sur une longueur de 3 à 30 mm, l'extrémité aval de la zone réfrigérée étant située à une distance de l'orifice de sortie comprise entre 0 et 60 mm.

**Claims**

1. Process for producing, by blown film extrusion, a sleeve of vinyl chloride – based resin, at least one face of which is matt in appearance and which is particularly suitable for producing optionally sterilizable packaging bags, in which at least one of the faces of the extruded sleeve is cooled superficially upstream of the exit orifice of the extrusion die (1) by means of a circulation of a refrigerant fluid, characterised in that the temperature To of the refrigerant fluid is chosen so as to satisfy the relationship:

$$Tm - \frac{0,40 \cdot Tc}{(1-0,32 \, G^{0,1525})} - 35°C \leq To \leq Tm - \frac{0,40 \cdot Tc}{(1-0,32 \, G^{0,1525})} - 2°C$$

in which:
- Tm is the mean temperature of the resin at the die exit,
- Tc is a temperature characteristic of the extruded resin and is given by the relationship:

$$Tc = \frac{RTm^2}{E}$$

in which E is the activation energy of the resin, measured by means of a capillary viscometer, at the temperature Tm, R being the universal gas constant, and
- G is given by the formula:

$$G = \frac{\rho \, C_p \, V \, H^2}{\lambda L}$$

in which:
- $\rho$ is the density of the resin,
- $C_p$ is the specific heat of the resin,
- V is the mean extrusion velocity of the resin in the refrigerated part (L) of the die,
- H is the height of the die gap in the refrigerated zone,
- L is the length of the refrigerated zone, and
- $\lambda$ is the thermal conductivity of the resin.

2. Process according to Claim 1, characterised in that the refrigeration is performed by a thin annular film of refrigerant fluid circulating in the direction of the extrusion axis.

3. Process according to Claim 1 or 2, characterised in that the extruded sleeve is subjected to a drawing operation at a velocity of between 3 m/min and 13 m/min.

4. Process according to any one of Claims 1 to 3, characterised in that at the end of the die (1) the resin is passed through an abruptly reduced flow section.

5. Process according to any one of Claims 1 to 4, characterised in that the sleeve is cooled, upstream of the exit orifice of the extrusion die, over a length of 3 to 30 mm, the downstream end of the refrigerated zone being situated at a distance of between 0 and 60 mm from the exit orifice.

**Patentansprüche**

1. Verfahren zur Herstellung durch Extrusionsblasformen eines Schlauches aus Kunststoff auf der Basis von Vinylchlorid, dessen wenigstens eine Seite ein mattes Aussehen aufweist und der insbesondere zur Herstellung von Verpackungsbeuteln geeignet ist, die gegebenenfalls sterilisiert werden können, wobei wenigstens eine der Seiten des extrudierten Schlauches oberflächlich aufwärts von der Ausgangsöffnung der Extrusionsdüse (1) mittels Zirkulation einer Kühlflüssigkeit gekühlt wird, dadurch gekennzeichnet, daß man die Temperatur To der Kühlflüssigkeit derart wählt, daß die Beziehung:

$$Tm - \frac{0,40 \cdot Tc}{(1-0,32 \, G^{0,1525})} - 35°C \leq To \leq Tm - \frac{0,40 \cdot Tc}{(1-0,32 \, G^{0,1525})} - 2°C$$

9

erfüllt wird, in der:
- Tm die Durchschnittstemperatur des Kunststoffes beim Ausgang aus der Düse ist;
- Tc eine für den extrudierten Kunststoff charakteristische Temperatur ist, die durch die Gleichung:

$$Tc = \frac{RTm^2}{E}$$

gegeben ist,
in der E die Aktivierungsenergie des Kunststoffs, gemessen mittels eines Kapillarviskosimeters, bei der Temperatur Tm ist, wobei R die universelle Gaskonstante ist und
- G durch die Formel:

$$G = \frac{p\ c_P\ V\ H^2}{\lambda\ L}$$

gegeben ist, in der:
- $p$ die Volumenmasse des Kunststoffs ist,
- $c_p$ die spezifische Wärme des Kunststoffes ist;
- V die durchschnittliche Extrusionsgeschwindigkeit des Kunststoffes in dem abgekühlten Teil (L) der Düse ist,
- H die Höhe des Düsenspaltes in der abgekühlten Zone ist,
- L die Länge der abgekühlten Zone ist und
- $\lambda$ die thermische Leitfähigkeit des Kunststoffes ist.

2. Verfahren nach Anspruch 1, dadurch gekennzeichnet, daß die Abkühlung durch einen dünnen ringförmigen Film der Abkühlungsflüssigkeit, die gemäß der Richtung der Extrusionsachse zirkuliert, durchgeführt wird.

3. Verfahren nach Anspruch 1 oder 2, dadurch gekennzeichnet, daß der extrudierte Schlauch einem Strecken unter einer Geschwindigkeit zwischen 3 m/min und 13 m/min unterzogen wird.

4. Verfahren nach einem der Ansprüche 1 bis 3, dadurch gekennzeichnet, daß man am Ende der Düse (1) den Kunststoff durch einen Abschnitt mit plötzlich verengtem Durchgang passieren läßt.

5. Verfahren nach einem der Ansprüche 1 bis 4, dadurch gekennzeichnet, daß der Schlauch aufwärts von der Ausgangsöffnung der Extrusionsdüse auf einer Länge von 3 bis 30 mm gekühlt wird, wobei das untere Ende der abgekühlten Zone in einem Abstand von 0 bis 60 mm von der Ausgangsöffnung liegt.

fig. 2

fig. 1